(19) Europäisches Patentamt
European Patent Office
Office européen des brevets

(11) Veröffentlichungsnummer: **0 545 220 A1**

(12) **EUROPÄISCHE PATENTANMELDUNG**

(21) Anmeldenummer: **92119965.9**

(51) Int. Cl.5: **C09B 67/22**, D06P 3/66

(22) Anmeldetag: **24.11.92**

(30) Priorität: **05.12.91 DE 4140117**

(43) Veröffentlichungstag der Anmeldung:
**09.06.93 Patentblatt 93/23**

(84) Benannte Vertragsstaaten:
**CH DE FR GB LI**

(71) Anmelder: **BAYER AG**

**W-5090 Leverkusen 1 Bayerwerk(DE)**

(72) Erfinder: **Schwarz, Max, Dr.**
**Am Wasserturm 18**
**W-5090 Leverkusen 3(DE)**
Erfinder: **Grütze, Joachim, Dr.**
**Eschenweg 25**
**W-5068 Odenthal(DE)**
Erfinder: **Hildebrand, Dietrich, Dr.**
**Wingensiefer Kamp 13**
**W-5068 Odenthal(DE)**
Erfinder: **Wolff, Joachim, Dr.**
**Schlinghovenerstrasse 38**
**W-5068 Odenthal(DE)**
Erfinder: **Stöhr, Frank, Dr.**
**Am Thelen Siefen 10**
**W-5068 Odenthal(DE)**

(54) **Verbesserte Reaktivfarbstoff-Rotmischung.**

(57) Verbesserte Reaktivfarbstoff-Rotmischungen enthalten jeweils wenigstens eine Komponente der Formel 1

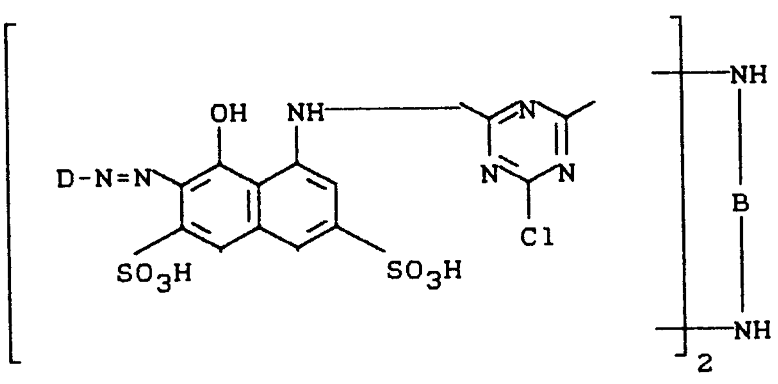

(1)

sowie eine Komponente der Formel 2

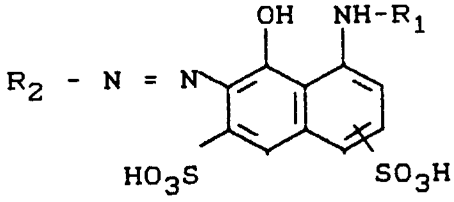

(2)

EP 0 545 220 A1

worin die Substituenten die in der Beschreibung angegebene Bedeutung haben.

Die Erfindung betrifft eine neue Reaktivfarbstoff-Rotmischung.

Reaktivfarbstoffe zum Färben von Cellulosefasern dienen insbesondere zum Färben in brillanten Tönen für Artikel, die eine hohe Waschechtheit verlangen. Hierbei ist u.a. von besonderem Interesse die Erstellung sehr klarer Rottöne. Die Erstellung sehr klarer Rottöne auf Basis eines einheitlichen Reaktivfarbstoffmoleküls ist mit erheblichen technischen Einschränkungen belastet. Bekannte Farbstoffe hoher Brillanz ergeben in der Regel nicht die gewünschte Nuance. Nach coloristischen Gesichtspunkten aufgestellte Kombinationen neigen vielfach zu einem unegalen Aufziehen und vorschnellen Fixieren, besonders auf Kurzflottenfärbeaggregaten, so daß ihre diesbezügliche Anwendung eingeschränkt ist.

Die in der heutigen Praxis verwendeten Kombinationen erweisen sich für viele Anforderungen als ungeeignet, da die erforderliche Robustheit gegenüber variablen Alkali-, Salz- und Temperaturbedingungen sowie unterschiedlichen Flottenverhältnissen nicht erreicht wird. Bekannt sind beispielsweise sogenannte Marlboro-Rotmischungen aus je einem Reaktivrot- und Gelbfarbstoff, diese zeigen jedoch den Nachteil, in der anfallenden Nuance von der Färbetemperatur abhängig zu sein, wodurch eine Einschränkung ihrer Verwendbarkeit gegeben ist.

Bei den Mischungen sollen die Reaktivitäten der Einzelkomponenten der Mischung möglichst gleich oder zumindest ähnlich sein, um die Kombinierbarkeit der Farbstoffe während des Färbevorgangs zu gewährleisten und somit ein "ruhiges", egales Warenbild zu erreichen. Besitzen Reaktivfarbstoffe stark unterschiedliche Reaktivitäten, so werden sie als voneinander verschiedenen Farbstoffsortimenten zugehörig angesehen, die nach unterschiedlichen Alkali- und Temperaturbedingungen angewandt werden müssen. Nach dem heutigen Sprachgebrauch werden die Reaktivfarbstoffe aufgrund ihrer unterschiedlichen Reaktivität in drei Gruppen eingeteilt: Hochreaktive Reaktivfarbstoffe, die bereits unter 40 °C färbbar sind, bezeichnet man als Kaltfärber, Farbstoffe, die bei 40 - 60 °C angewandt werden, als Warmfärber, und Farbstoffe, die im Bereich von 80 °C angewandt werden, als Heißfärber. Aufgrund ihrer unterschiedlichen Reaktivität und Substantivität werden die drei unterschiedlich reaktiven Farbstoffsortimentsgruppen mittels gruppentypischer Verfahrensvorschriften appliziert.

Der Unterschied zwischen der Anwendung eines Warmfärbers und eines Heißfärbers besteht z.B. in einer beim Heißfärber um 20 - 40 °C höheren Färbetemperatur, in einer um 40 g/l Kochsalz höheren Elektrolytkonzentration und einer um 10 g/l höheren Sodakonzentration des Färbebades.

Farbstoffmischungen sind bereits bekannt aus EP-A-478 503.

Der Erfindung liegt die Aufgabe zugrunde, verbesserte Reaktivfarbstoffmischungen bereitzustellen, die bei guter Fixierausbeute einen gleichmäßigen Fixierkurvenverlauf zeigen, der dem der Einzelfarbstoffe überlegen ist. Weiterhin sollen sie eine klare Rotfärbung ergeben, eine hohe Löslichkeit und Elektrolytunempfindlichkeit aufweisen sowie bei variablen Temperatur-, Alkali- und Flottenbedingungen ein nuancenkonstantes flächenegales und reproduzierbares Färbeverhalten zeigen.

Die Erfindung betrifft eine Farbstoffmischung aus wenigstens 2 Reaktivfarbstoffen, dadurch gekennzeichnet, daß jeweils wenigstens eine Komponente der Formel 1

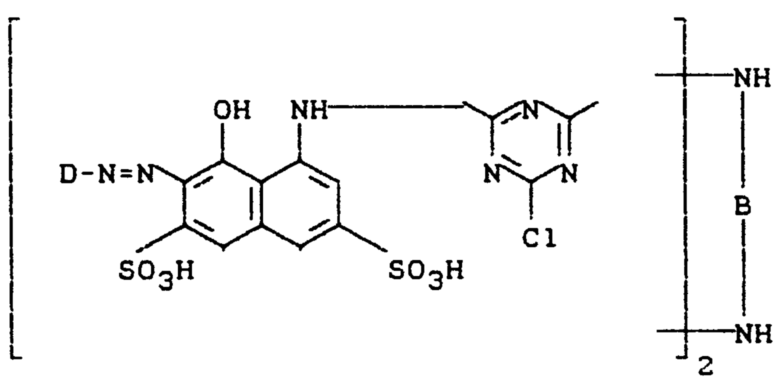 (1)

sowie eine Komponente der allgemeinen Formel 2

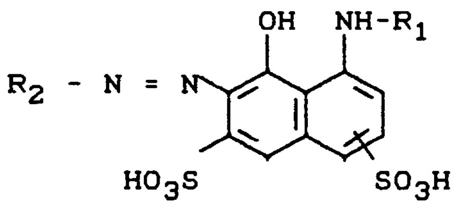

(2)

sowie gegebenenfalls ein Farbstoff der Formel 3

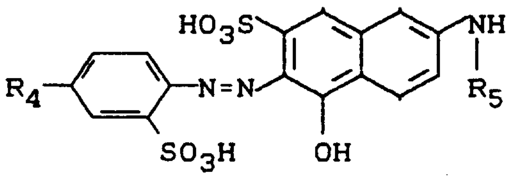

(3)

enthalten sind, worin bedeuten

$R_1$ =

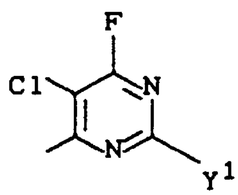 , 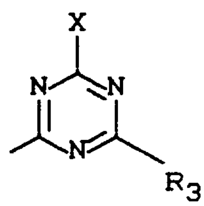

oder ein Acylrest, insbesondere einer aromatischen Carbonsäure, insbesondere Benzoyl

$R_2$ =

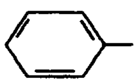 , 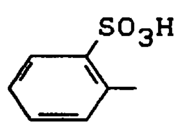 , 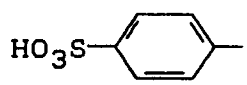

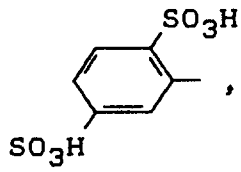 , 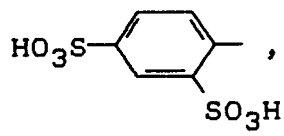 , 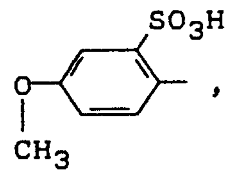 ,

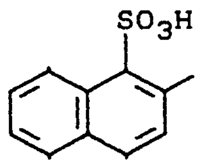 , 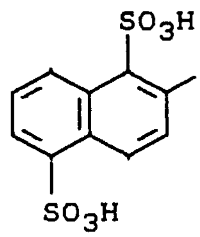 , 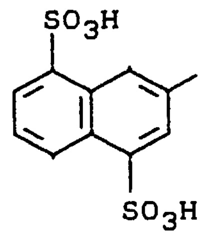 ,

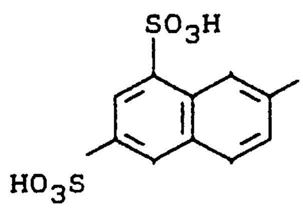 , 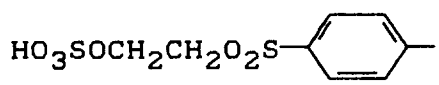 ,

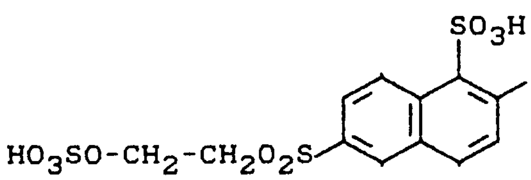 , 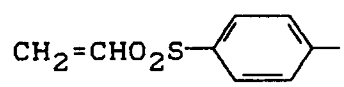 ,

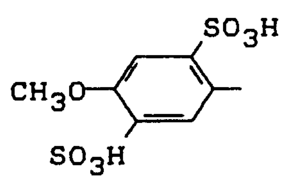 , 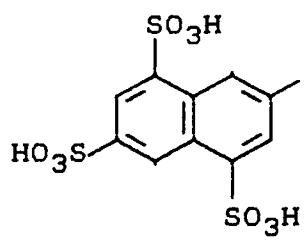 ,

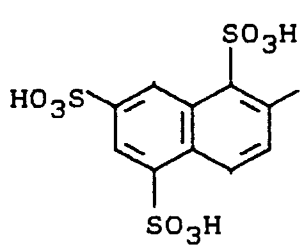 ,

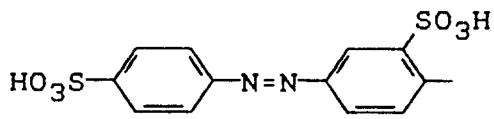,

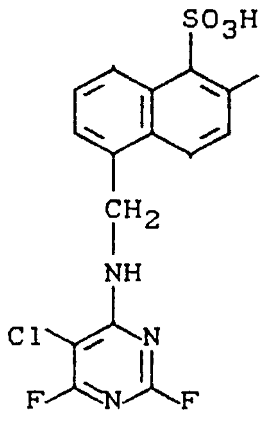

oder

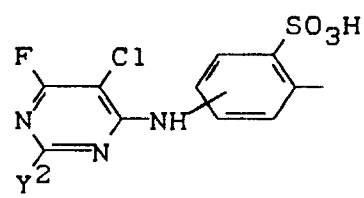

$R_3$ =

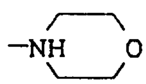,

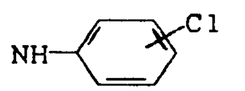,

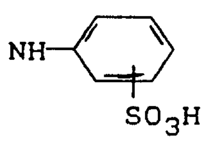,

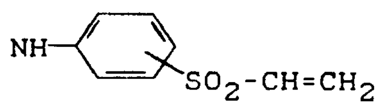,

$-NH-C_2H_4-O-C_2H_4-SO_2-CH=CH_2$ ,

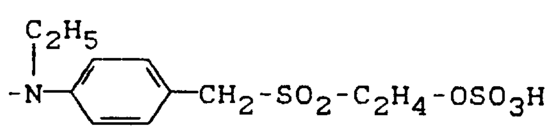

$R_4$ = $CH_3-O-$ oder

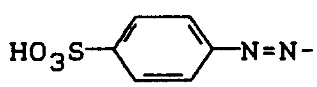

$R_5$ =

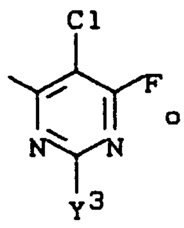 oder 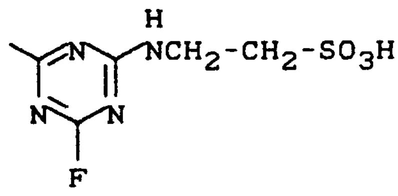

B = aliphatisches oder aromatisches Brückenglied

D =

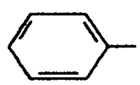 , 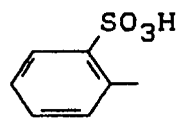 , 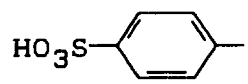 ,

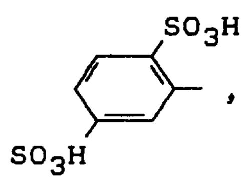 , 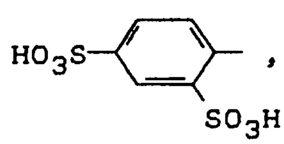 , 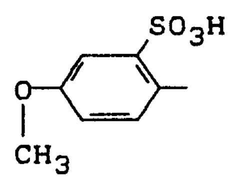 ,

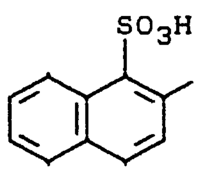 , 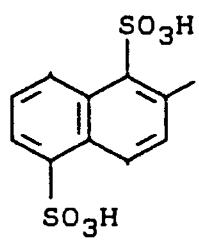 , 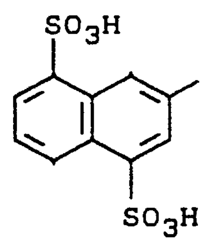 ,

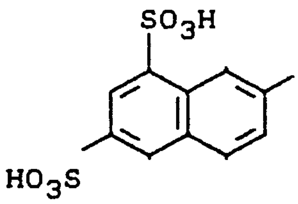,

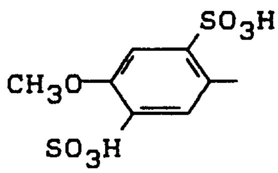, 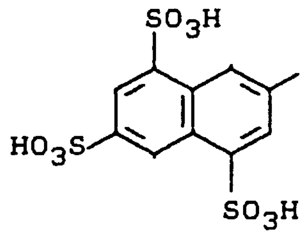,

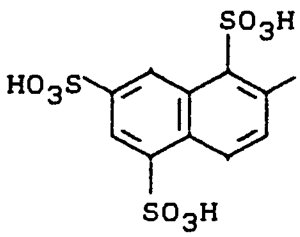, 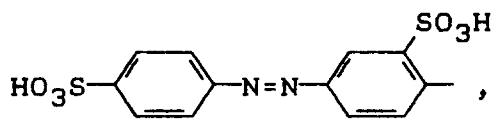,

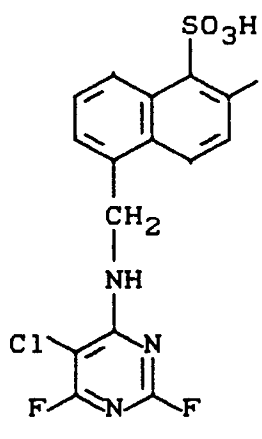 oder 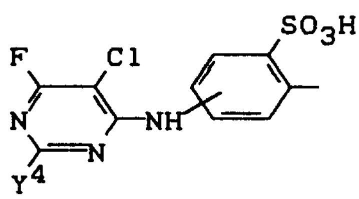

X = F, Cl

$Y^1$-$Y^4$ = unabhängig voneinander H oder F

und wobei wenigstens einer der Reste $R_1$ und $R_2$ eine faserreaktive Gruppe enthält.

Besonders bevorzugte Farbstoffe 1) sind

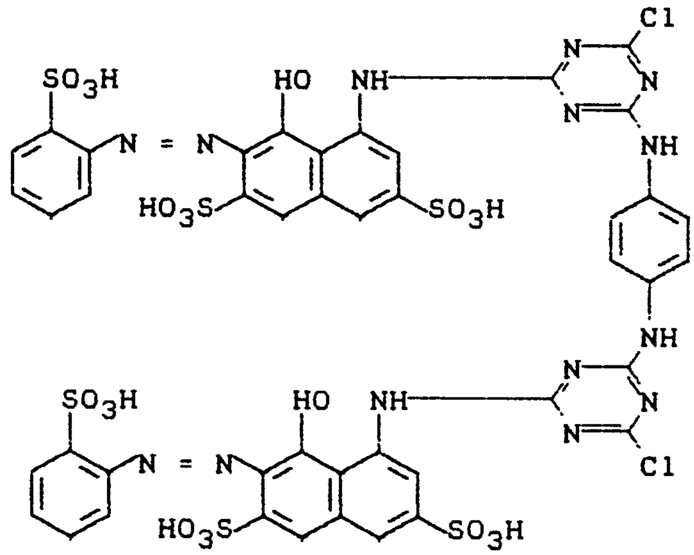

1.1

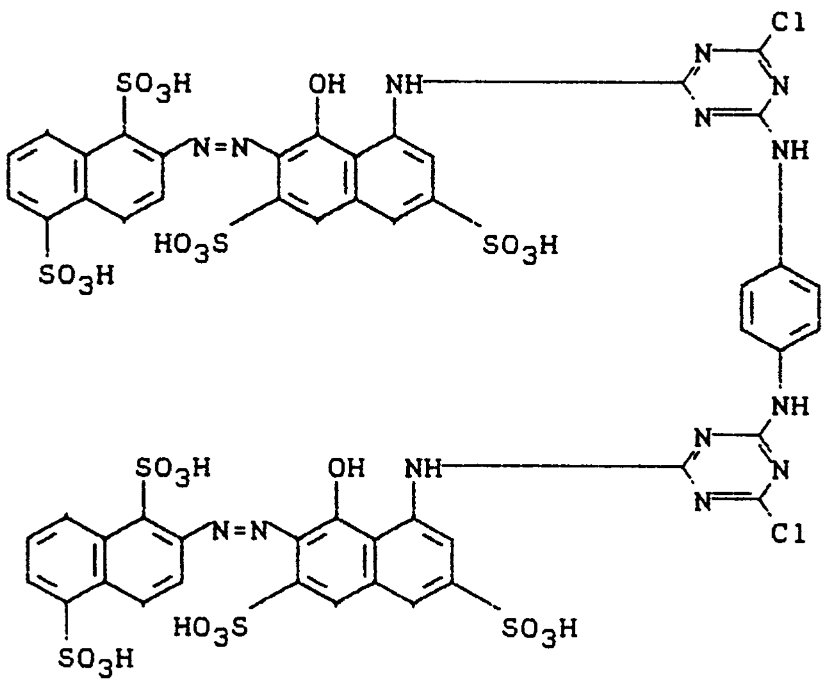

1.2

In einer bevorzugten Ausführungsform A enthält die Mischung
70 - 40 Teile eines Farbstoffs 1
20 - 40 Teile eines Farbstoffs 2
10 - 20 Teile eines Farbstoffs 3.

In einer weiteren bevorzugten Ausführungsform B enthält die Mischung
80 - 20 Teile eines Farbstoffs 1 und
80 - 20 Teile eines Farbstoffs 2.

B ist insbesondere ein Alkylen-, Aralkylen- oder Arylenrest. Der Ausdruck aliphatisches Brückenglied schließt auch cycloaliphatische Reste ein. So kann B ein geradkettiger oder verzweigter $C_1$-$C_{10}$-Alkylenrest sein; insbesondere kommt ein Alkylenrest mit 2 bis 6 Kohlenstoffatomen in Betracht, z.B. Ethylen, Propylen, Butylen, Hexylen oder Cyclohexylen. Als Arylenrest ist B z.B. ein Naphthylenrest, der Rest eines Diphenyls oder Stilbens oder insbesondere ein Phenylenrest. Als Aralkylenrest ist B insbesondere ein Benzylenrest. Der Rest B kann weitere Substituenten enthalten, z.B. Halogenatome, wie Fluor, Chlor und Brom, Alkylgruppen mit 1 bis 4 Kohlenstoffatomen, wie Methyl, Ethyl und Propyl, Alkoxygruppen mit 1 bis 4 Kohlenstoffatomen, wie Methoxy, Ethoxy, Propoxy und Isopropoxy, Carboxy oder Sulfo. Vorzugsweise ist B $C_{2-6}$-Alkylen oder gegebenenfalls substituiertes Phenylen. Bevorzugt ist der Ethylenrest, der Phenylenrest und der Sulfophenylenrest.

In einer besonders bevorzugten Mischung A sind folgende Farbstoffe enthalten:

| Gruppe | Formel | Farbstoff Nr. |
| --- | --- | --- |
| 1 | 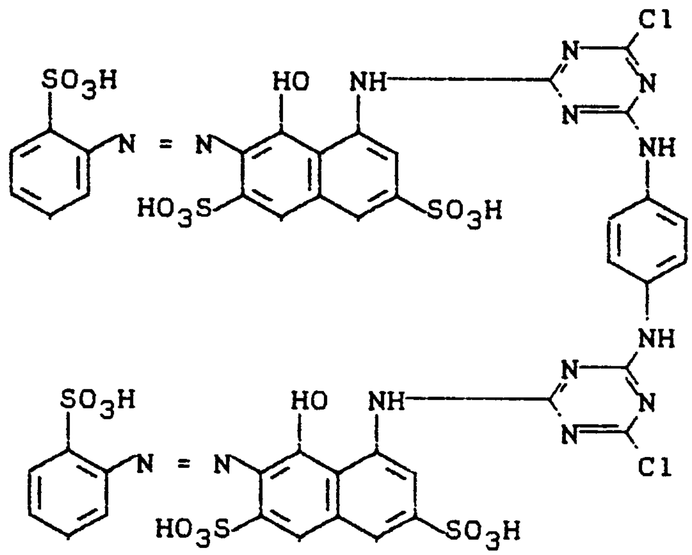 | 1.1 |
| 2 | 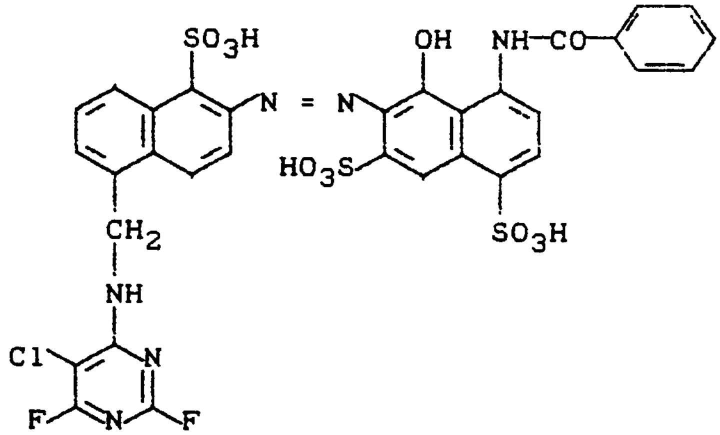 | 2.1 |
| 3 | 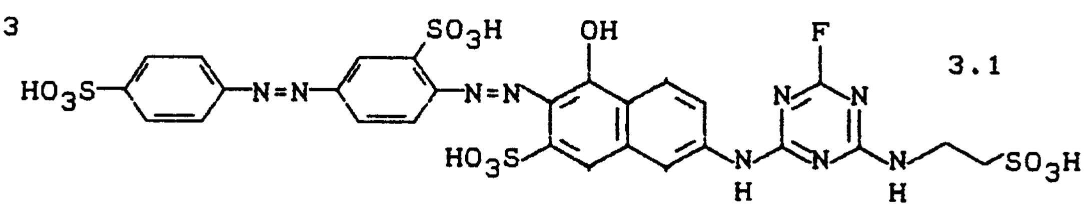 | 3.1 |

Eine besonders bevorzugte Mischung B besteht aus folgenden Komponenten:

Gruppe 1

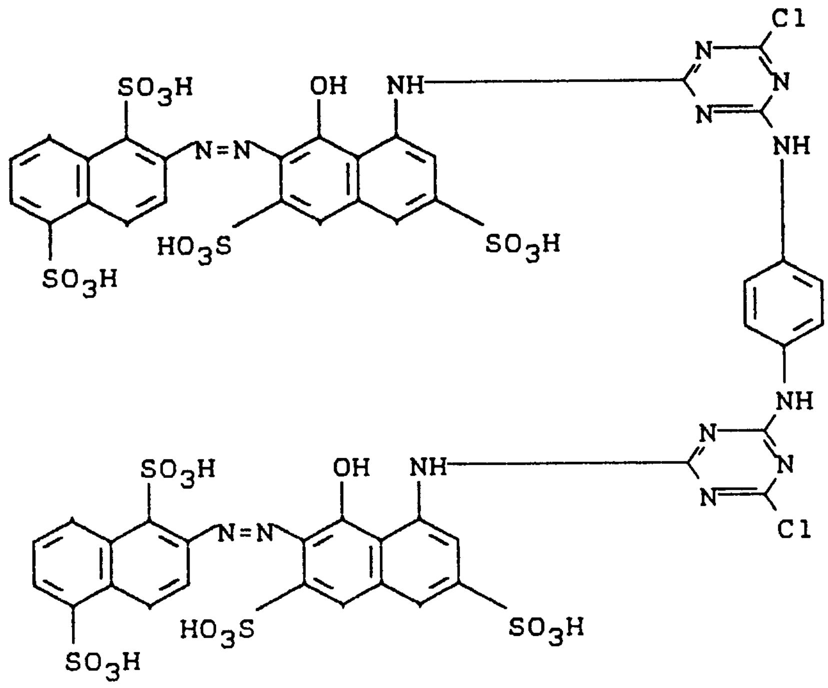

1.2

Gruppe 2

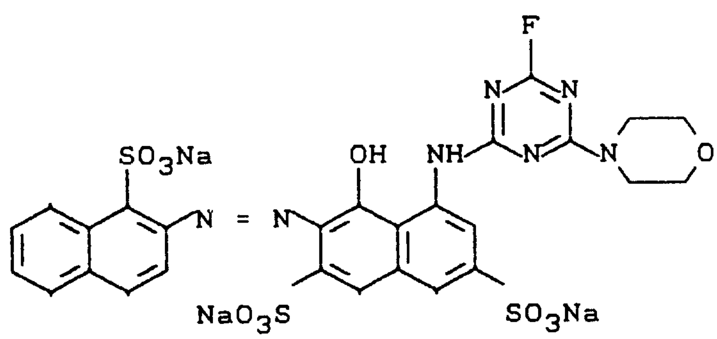

2.2

Beispiel 1

100 Teile einer Baumwollwirkware werden bei 30 ° C mit 1000 Teilen einer wäßrigen Färbeflotte behandelt: welche
4 Teile einer eingestellten Rotmischung bestehend aus
15 Teilen Farbstoff 3.1
15 Teilen Farbstoff 2.1
70 Teilen Farbstoff 1.1
sowie
1/2 Teil Natriumbicarbonat
50 Teile Natriumchlorid und
20 Teile Soda (wasserfrei)
gelöst enthält.

Nach gleichmäßiger Verteilung des Farbstoffs auf dem Fasermaterial über 45 Minuten bei 30 ° C wird die Flotte in 30 Minuten auf 60 ° C erwärmt und 90 Minuten bei lebhafter Warenbewegung und guter Flottenzirkulation bei dieser Temperatur behandelt. Danach wird die Flotte abgelassen, zweimal bei 50 ° C und zweimal bei 80 ° C gespült. Daraufhin wird mit frischer Flotte aufgefüllt und auf 98 ° C erwärmt. Nach 10

Minuten wird abgelassen und erneut 10 Minuten bei 98°C behandelt. Daraufhin wird abgelassen und kalt gespült.

Man erhält eine brillante Rotfärbung mit guten Echtheitseigenschaften.

Beispiel 2

100 Teile einer Baumwollwirkware werden auf einem Kurzflottenjet bei 30°C mit 400 Teilen einer wäßrigen Flotte behandelt, welche
3 Teile einer Rotmischung bestehend aus:
20 Teilen Farbstoff 3.1
20 Teilen Farbstoff 2.3
60 Teilen Farbstoff 1.1
sowie
0,5 Teile Natriumbicarbonat
15 Teile Soda (wasserfrei) und
30 Teile Natriumchlorid
gelöst enhält.

Farbstoff 2.3 hat folgende Formel

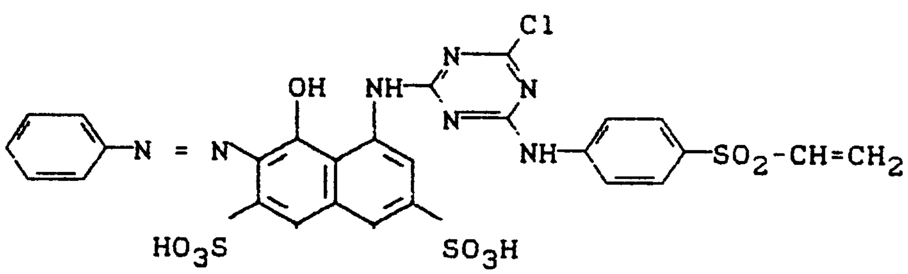

Nach 30 Minuten Behandlung bei dieser Temperatur wird während 30 Minuten auf 60°C erwärmt und weitere 90 Minuten bei dieser Temperatur unter lebhafter Flottenzirkulation und Warenbewegung gefärbt.

Daraufhin wird die Flotte abgelassen, zweimal bei 50°C und zweimal bei 80°C gespült und zweimal je 10 Minuten bei Kochtemperatur behandelt Anschließend wird kalt gespült.

Man erhält eine sehr klare Rotfärbung mit guten Echtheitseigenschaften.

Beispiel 3

1000 Teile einer wäßrigen Färbeflotte werden bei 30°C mit 100 Teilen Baumwollwirkware und 2 Teilen Reaktivfarbstoffmischung versetzt. Die Mischung besteht aus je 1 Teil des Farbstoffs 1.2 und des Farbstoffs 2.2.

Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Diese Färbeflotte wird bei lebhafter Flotten- und Warenbewegung innerhalb 30 Minuten auf 80°C erwärmt und bei dieser Temperatur 30 Minuten belassen.

Danach wird die Flotte abgelassen, zweimal bei 50°C und zweimal bei 80°C gespült. Anschließend wird 15 Minuten kochend geseift und kalt gespült.

Man erhält eine egale Rotfärbung mit guten Echtheitseigenschaften.

Werden die Einzelfarbstoffe der Farbstoffmischungen gefärbt, ergeben sich die in Fig. 1 dargestellten Fixierkurven.

Der reaktivere Farbstoff beginnt nach Zugabe des Fixiermittels bei 30°C sofort mit der Cellulosefaser zu reagieren.

Wenn die Hauptreaktion sich verlangsamt, beginnt die Aufheizphase auf die Endtemperatur von 60°C, während der eine erneute Reaktionsbeschleunigung beobachtet wird.

Kurze Zeit nach dem 60°C erreicht sind, geht die Fixierkurve in den waagerechten Teil über; die Färbung ist beendet.

Der weniger reaktive Farbstoff reagiert bei den gewählten Startbedingungen zunächst langsam mit der Faser. Während der Aufheizphase tritt jedoch eine deutliche Steigerung der Reaktionsgeschwindigkeit ein.

Wird die Färbung mit einer Mischung der Farbstoffe 1.2 und 2.2 durchgeführt, dann zeigen die Einzelkomponenten in der Mischung ein gegenüber dem Typfarbstoff harmonischeres Aufziehverfahren, das heißt der reaktionsträgere Farbstoff fixiert in der beanspruchten Mischung bei gleichen Fixierbedingungen schneller als seinem Fixierverhalten als Typ entspricht.

## Patentansprüche

1. Farbstoffmischung aus wenigstens 2 Reaktivfarbstoffen, dadurch gekennzeichnet, daß jeweils wenigstens eine Komponente der Formel 1

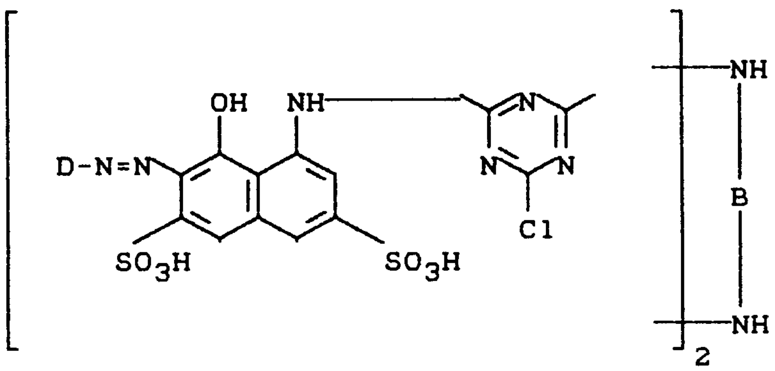

(1)

sowie eine Komponente der allgemeinen Formel 2

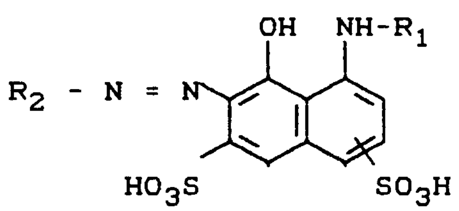

(2)

enthalten ist, worin bedeuten

$R_1$ =

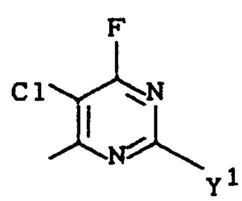

,

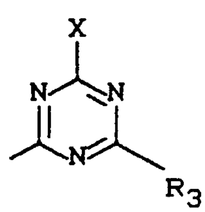

oder Acyl,

$R_2$ =

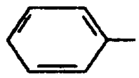 , 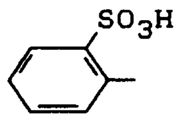 , 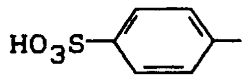 ,

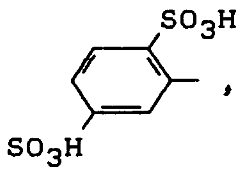 , 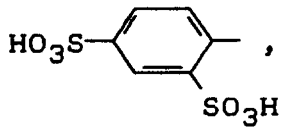 , 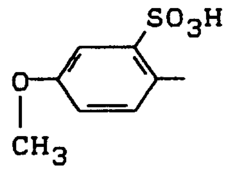 ,

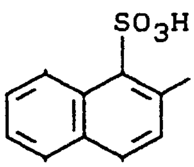 , 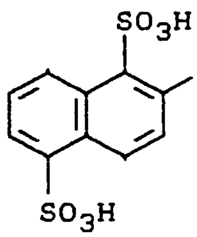 , 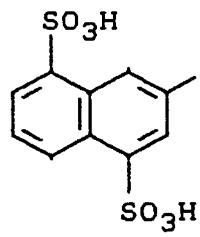 ,

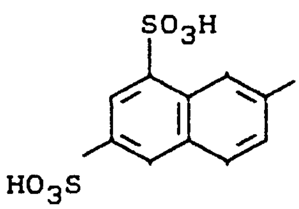 , 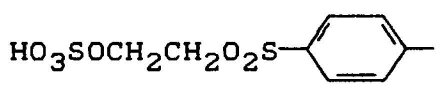 ,

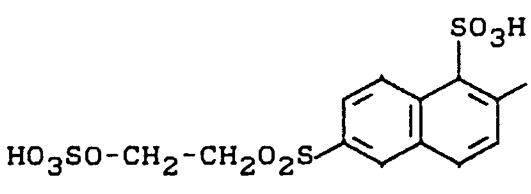 , 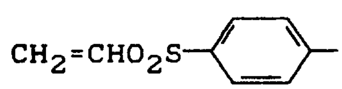 ,

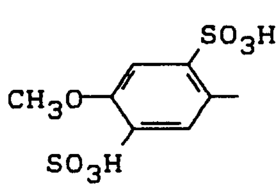 , 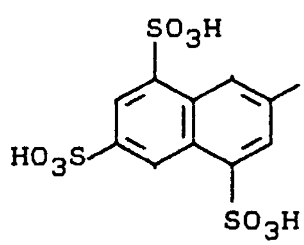 ,

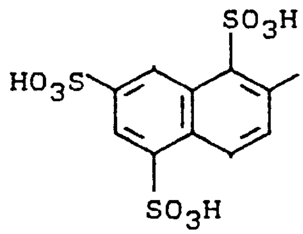

,

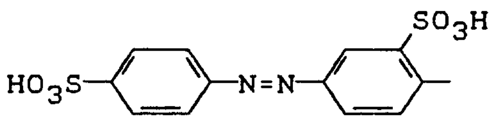

,

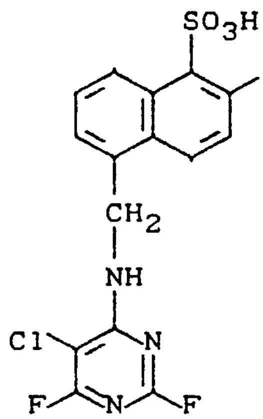

oder

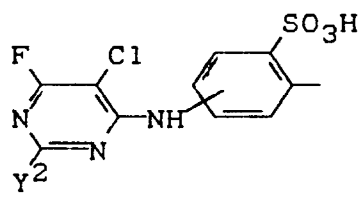

$R_3$ =

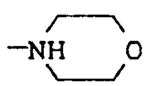

,

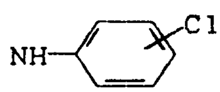

,

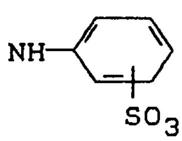

,

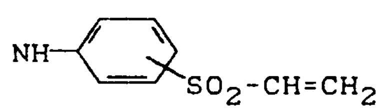

,

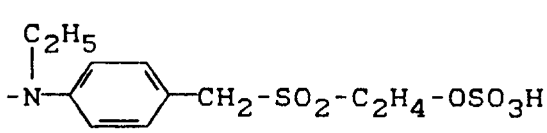

$-NH-C_2H_4-O-C_2H_4-SO_2-CH=CH_2$ ,

B = aliphatisches oder aromatisches Brückenglied

D =

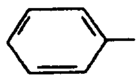 , 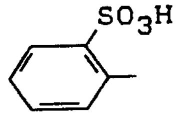 , 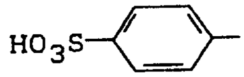 ,

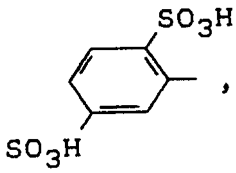 , 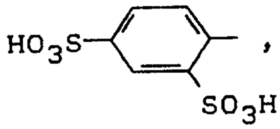 , 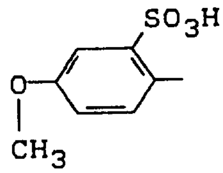 ,

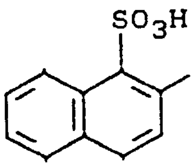 , 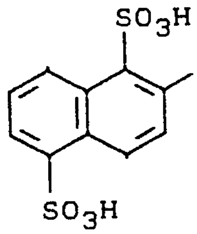 , 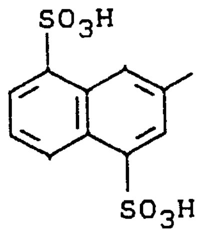 ,

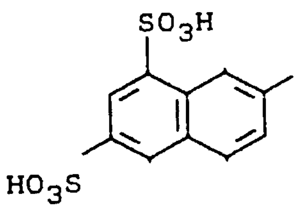

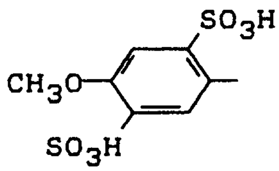 ,

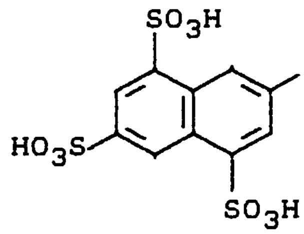 ,

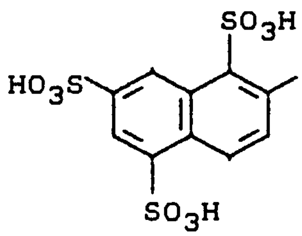 ,

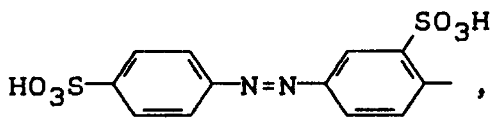 ,

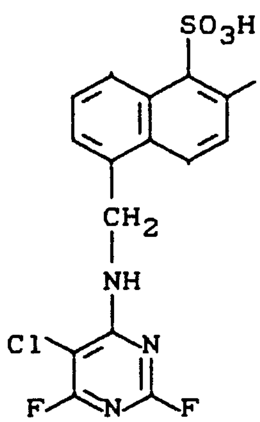

oder

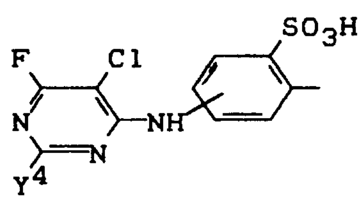

X = F, Cl

$Y^1$-$Y^4$ = unabhängig voneinander H oder F

und wobei wenigstens einer der Reste $R_1$ und $R_2$ eine faserreaktive Gruppe enthält.

**2.** Farbstoffmischung gemäß Anspruch 1, dadurch gekennzeichnet, daß zusätzlich ein Farbstoff der Formel

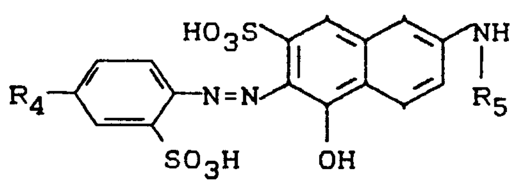

(3)

worin

$R_4$ =

$CH_3-O-$ 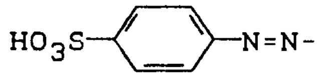

$R_5$ =

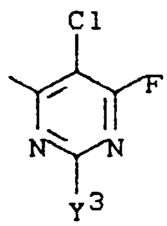 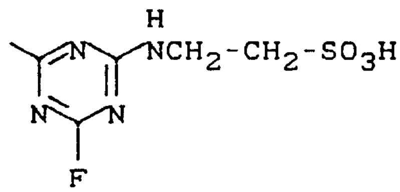

enthalten ist,

3. Farbstoffmischung gemäß Anspruch 1, dadurch gekennzeichnet, daß sie aus 80 bis 20 Teilen eines Farbstoffs 1 und 20 - 80 Teilen eines Farbstoff 2 besteht,

4. Farbstoffmischung gemäß Anspruch 1, dadurch gekennzeichnet, daß sie folgende Farbstoffe enthält:

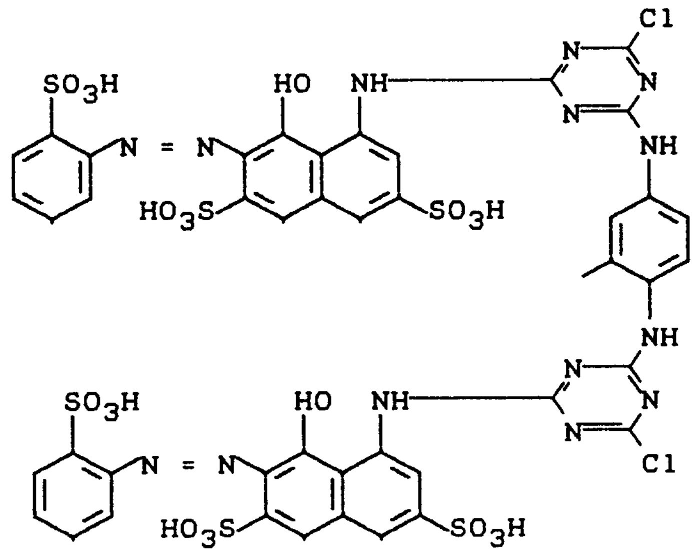

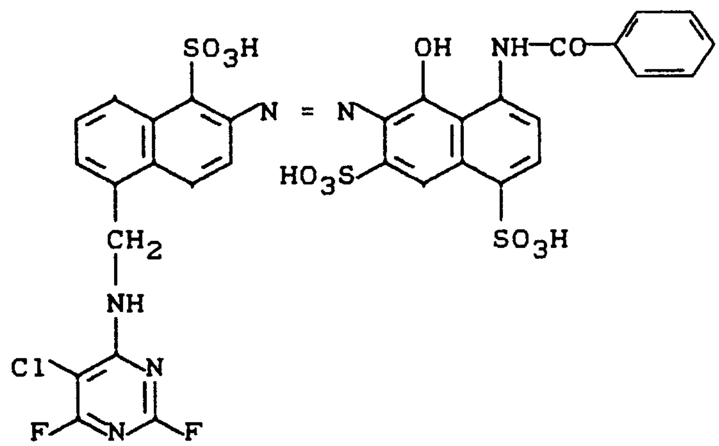

und

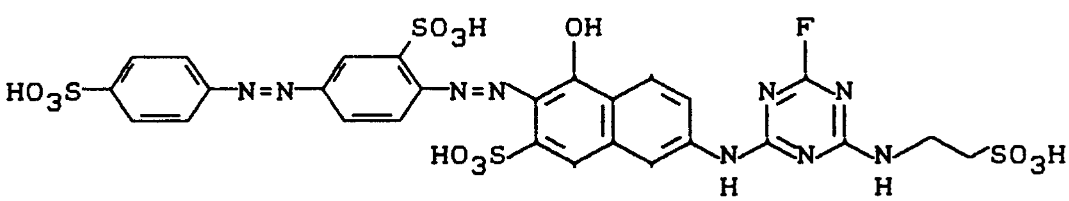

5. Farbstoffmischung gemäß Anspruch 1, dadurch gekennzeichnet, daß sie folgende Verbindungen enthält:

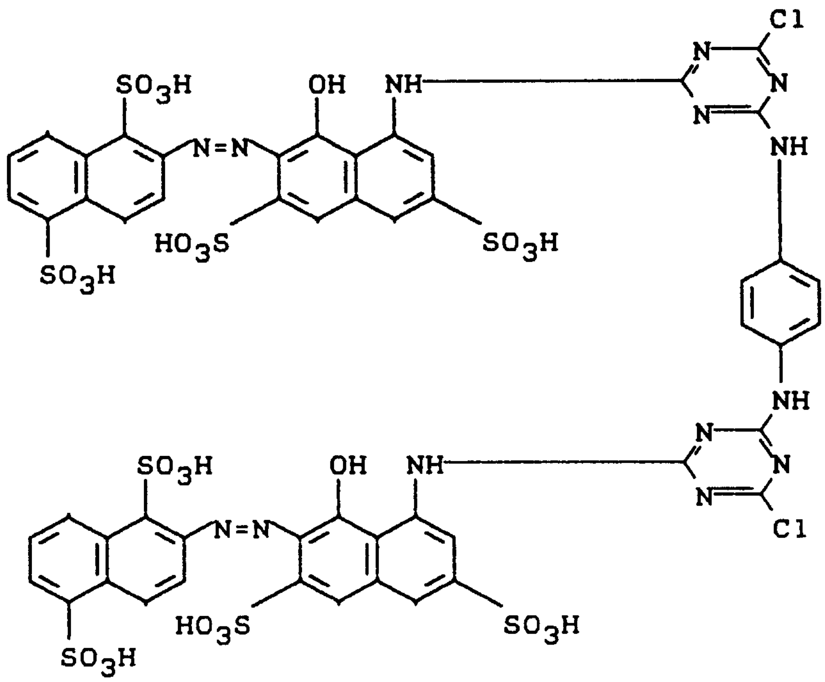

und

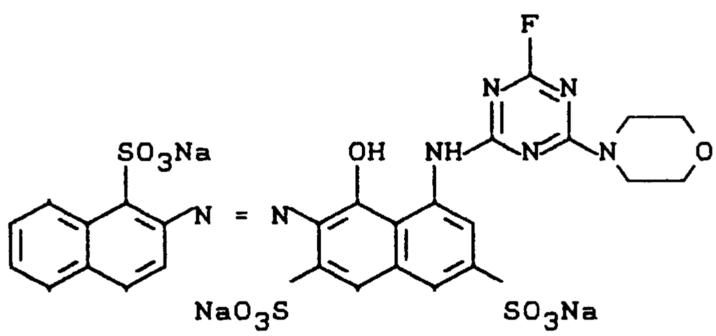

6. Mischung nach Anspruch 1, dadurch gekennzeichnet, daß die Farbstoffmischung in 100 Teilen Mischfarbstoff 1-50 Teile eines anorganischen Salzes enthält.

7. Mischung nach Anspruch 1, dadurch gekennzeichnet, daß sie auf 100 Teile des Mischfarbstoffs 1-5 Teile eines anorganischen Puffers enthält und einen pH von 6,5 bis 7,5 aufweist.

8. Mischung nach Anspruch 1, dadurch gekennzeichnet, daß die Mischung 0,5 - 10 Teile eines handelsüblichen organischen anionischen Dispergiermittels enthält.

9. Mischung nach Anspruch 1, dadurch gekennzeichnet, daß die Mischung 0,5 - 5 Teile eines handelsüblichen Entstaubungsmitels enthält.

10. Mischung nach Anspruch 1, dadurch gekennzeichnet, daß die Mischung eines Flüssigmischung darstellt.

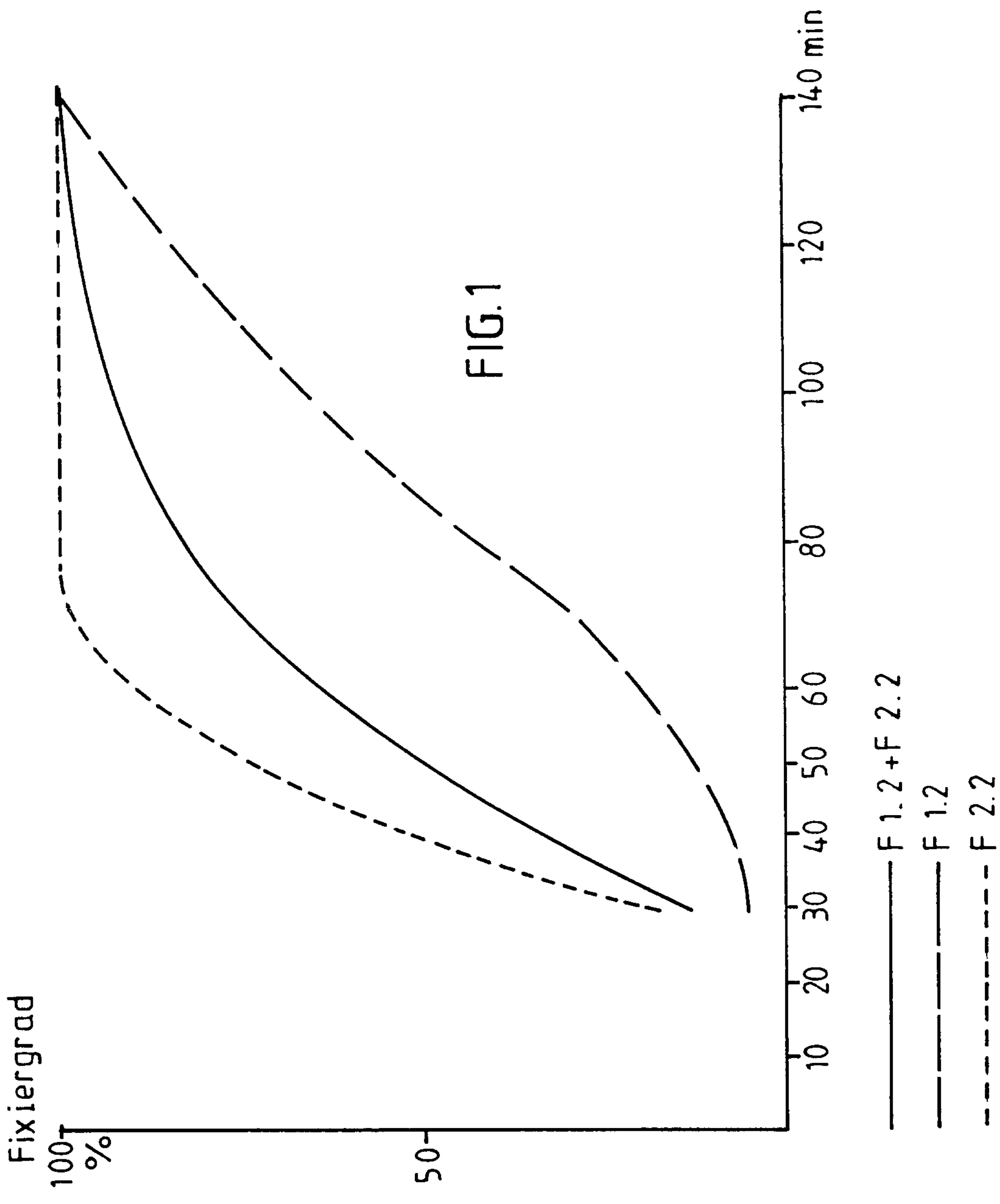
Fixiergrad
100 %
50
10
20
30
40
50
60
80
100
120
140 min
F 1.2 + F 2.2
F 1.2
F 2.2

FIG.1

Europäisches Patentamt

# EUROPÄISCHER RECHERCHENBERICHT

Nummer der Anmeldung
EP 92 11 9965

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,P, X | EP-A-0 478 503 (CIBA-GEIGY)<br>* Seite 1 - Seite 10, Zeile 11; Ansprüche * | 1 | C09B67/22<br>D06P3/66 |
| A | GB-A-2 226 336 (SANDOZ)<br>* das ganze Dokument * | 1 | |

| RECHERCHIERTE SACHGEBIETE (Int. Cl.5 ) |
|---|
| C09B<br>D06P |

Der vorliegende Recherchenbericht wurde für alle Patentansprüche erstellt

| Recherchenort | Abschlußdatum der Recherche | Prüfer |
|---|---|---|
| DEN HAAG | 02 MAERZ 1993 | KETTERER M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)